(19) **Europäisches Patentamt**
**European Patent Office**
**Office européen des brevets**

(11) **EP 2 992 064 B1**

(12) **EUROPEAN PATENT SPECIFICATION**

(45) Date of publication and mention
of the grant of the patent:
**09.01.2019 Bulletin 2019/02**

(51) Int Cl.:
***C09K 5/10*** [(2006.01)]

(21) Application number: **13737865.9**

(22) Date of filing: **29.04.2013**

(86) International application number:
**PCT/IT2013/000126**

(87) International publication number:
**WO 2014/178086 (06.11.2014 Gazette 2014/45)**

(54) **NANOFLUID COMPRISING A METAL OXIDE AND METHOD FOR THE PREPARATION OF THE SAME**

NANOFLUID MIT EINEM METALLOXID UND VERFAHREN ZUR HERSTELLUNG DAVON

NANOFLUIDE COMPRENANT UN OXYDE MÉTALLIQUE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2016 Bulletin 2016/10**

(73) Proprietor: **TCT S.R.L.**
**72100 Brindisi (IT)**

(72) Inventors:
• **MICALI, Francesco**
**72027 - San Pietro Vernotico (IT)**
• **LAFUENTI, Ivan**
**73020 - Cavallino (Lecce) (IT)**
• **BIANCO, Valentino**
**73050 - Secli (Lecce) (IT)**
• **DE RISI, Arturo**
**73100 -Lecce (IT)**

(74) Representative: **Conversano, Gabriele**
**Laforgia, Bruni & Partners srl**
**Via Michele Garruba, 3**
**70122 Bari (IT)**

(56) References cited:
**WO-A1-2013/030845**    **CN-A- 1 329 123**
**US-A1- 2012 006 509**    **US-B1- 6 221 275**

• **WANG X ET AL: "THERMAL CONDUCTIVITY OF NANOPARTICLE-FLUID MIXTURE", JOURNAL OF HEAT TRANSFER, NEW YORK, NY, US, vol. 13, no. 4, 1 October 1999 (1999-10-01), pages 474-481, XP008054284, ISSN: 0022-1481**
• **PASTORIZA-GALLEGO M J ET AL: "CuO in water nanofluid: Influence of particle size and polydispersity on volumetric behaviour and viscosity", FLUID PHASE EQUILIBRIA, ELSEVIER, AMSTERDAM, NL, vol. 300, no. 1-2, 25 January 2011 (2011-01-25), pages 188-196, XP027566890, ISSN: 0378-3812 [retrieved on 2010-12-20]**
• **LEE S ET AL: "MEASURING THERMAL CONDUCTIVITY OF FLUIDS CONTAINING OXIDE NANOPARTICLES", JOURNAL OF HEAT TRANSFER, NEW YORK, NY, US, vol. 121, no. 2, 1 January 1999 (1999-01-01), pages 280-289, XP000961462, ISSN: 0022-1481**

## Description

Object of the present invention is a nanofluid which comprises metal oxide nanoparticles, in particular copper oxide (CuO), provided with particular features in terms of dimensional and stability properties of the solid phase, chemical composition of the liquid phase as well as particular fluid-dynamic characteristics which make it particularly efficient in many technical applications.

With nanofluid it is intended a suspension or heterogeneous mixture comprising two phases, a solid phase and a liquid phase, wherein the dimensions of the components of the solid phase in suspension are nanometric. The two phases of the suspension can be separated also by means of mechanical methods, since the substances used for forming the heterogeneous mixture or suspension do not modify their structure, as it occurs instead, for example, in the solutions.

The presence of the nanopowders gives the nanofluid fluid-dynamic properties different with respect to the liquid phase free of nanopowders. For example, the heat exchange coefficient, the heat capacity, the viscosity, the density and the electric conductivity change.

In many nanofluids known at the state of the art, the nanoparticles of the solid phase have the tendency to sediment by gravity. This is a phenomenon with many drawbacks since it causes the lowering of the volume concentration of the nanoparticles in the nanofluid, thus modifying its fluid-dynamic characteristics. Moreover, the particles tend to accumulate on the bottom of the ducts or pipes in which the nanofluid flows, thus forming another layer, additional to the ducts layers, which is provided with its own roughness and heat resistance, and this is a clear problem for certain applications.

Another phenomenon observed in the nanofluids known at the state of the art is the tendency of the nanopowders to form clusters or agglomerates, i.e. particles made up from the union of many nanometric particles which have dimensions substantially greater than the single particles. Also this phenomenon is negative since it modifies the nanofluid properties and makes easy the tendency to sedimentation.

In CN1329123 is disclosed a nanofluid having 10% in volume of CuO nanoparticles (with diameter less than 100 nm) with respect to solution and 0,4% volume (with respect to nanofluid) of surfactant (specifically sodium laurate), that means 4% in volume with respect to the CuO nanopowder.

In US2012/006509 drawbacks of CuO nanoparticles with respect to zinc-Oxide nanoparticles are discussed: CuO nanofluid are less stable and tend to stick to the container.

Aim of the present invention is to provide a nanofluid having, with respect to the only reference liquid phase, a greater heat exchange capacity since it has a higher heat conductivity coefficient and a greater density and heat capacity.

The present invention provides further a stable nanofluid, wherein the solid phase does not tend to be separated from the liquid phase, depositing on the bottom of the containers in which the nanofluid is contained or in the pipes where it flows.

Preferably, the solid phase of the nanofluid object of the present invention comprises copper oxide nanopowders (CuO). Preferably the liquid phase object of the present invention comprises water and surfactants.

In particular, as it is explained in detail in the following, the characteristics which determine the heat exchange capacity and the stability of the nanofluid are the morphological, dimensional and structural characteristics of the solid component and the presence and concentration of chemical additives in the liquid phase.

The factors to be worked on to stabilize the suspension with respect to the nanopowders aggregation are the suspension pH, the interface tension and the surface electrostatic charge of the nanoparticles.

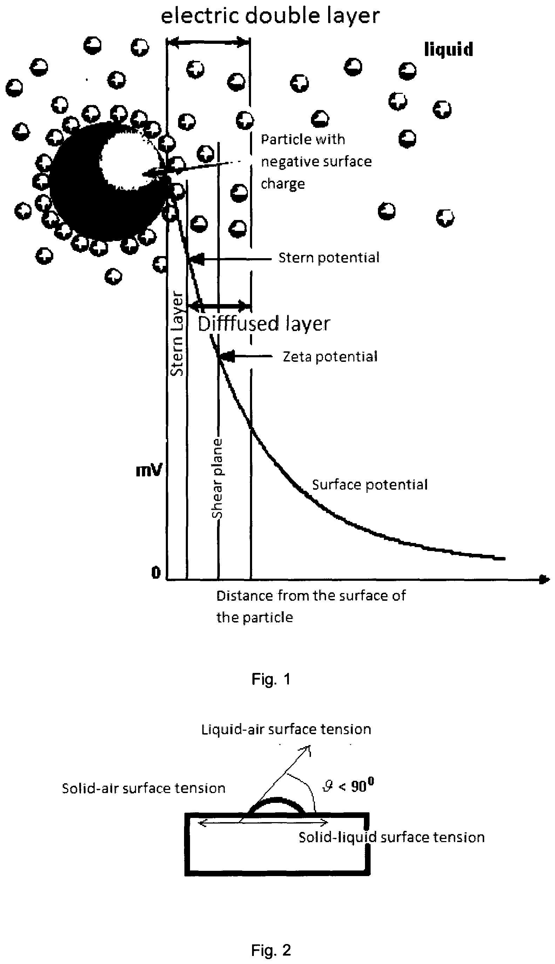

Generally, a particle dispersed in a liquid, at the surface has electrostatic charges which determine an electric field responsible for the redistribution of the ions provided in the space surrounding the same particle. This leads to an increase in ion concentration of charge opposed to the one of the particle at the surface. In particular, as it is shown in figure 1, the liquid layer surrounding the particle is made up of two zones: an inner one (Stern layer) with ions strongly linked to the particle, and an outer one (Gouy-Chapman layer or diffused layer), where the electrostatic interactions are weaker. The two zones constitute a double electric layer around each particle. Inside the diffused layer two zones can be defined, separated by a plane which is said shear plane. When the particle moves, the ions of the diffused layer closer to the same than to the shear plane move with it while those beyond the shear plane are continually substituted by other ions present in the liquid.

This charge distribution determines an electric potential variable according to the distance of the particle, which is said Zeta Potential. When two particles are so close that their double layers overlap, these repel each other with an electrostatic force whose intensity depends on the Zeta potential, and at the same time they attract each other by the known Van der Walls attraction. If the Zeta potential is too low, the repelling force is not strong enough to exceed the Van der Walls force between the particles, and these begin to agglomerate thus making the suspension instable. A high Zeta potential avoids instead the agglomeration and maintains uniform the dispersion.

Another condition on which the suspension stability depends is the wettability status of the solid particles, i.e. the capacity of the liquid to be distributed on the surface of a solid, which depends on the surface tensions of the liquid phase and solid phase.

In fact, when a liquid and a solid come in contact, an interface tension is provided owing to the interactions between the phases.

Assuming that a liquid drop is in contact to a solid surface as in figure 2: the profile of a liquid portion arranged on a solid surface forms a θ angle, which is said wettability angle, which is greater or lower than 90° depending on whether the cohesion forces prevail between the liquid molecules or whether the adherence forces prevail between the molecules of the two different solid and liquid phases. The θ angle can be expressed by the following relation

$$\cos(\theta) = (\gamma S - \gamma SL)/\gamma L \quad (1)$$

where yS, ySL e yL are respectively the surface tensions between the solid and the air, the solid and the liquid (interface tension) and the liquid and the air. From (1) it is noted how the wettability of the liquid can be increased by decreasing the surface tension of the liquid.

To obtain such a result inside the suspension, and so to decrease the aggregation tendency of the particles) there are introduced substances which influence the liquid-solid surface tension (surfactants). With surfactants it is intended a class of organic compounds comprising a hydrophilic portion (polar, presenting affinity with water and so soluble) and a hydrophobic portion (non polar, presenting affinity with oil substances and so insoluble in water). By adding a surfactant in the water based suspension, the surfactant molecules arrange themselves on the separation surfaces between the liquid phase and the solid phase with the polar portion towards the liquid phase and the non polar portion towards the solid phase (or aeriform in case of liquid-air separation surface).

It is observed that the wetting effect of the surfactant increases with the increase in its concentration in the suspension up to reach a value over which the surface tension, and as a consequence the interface tension, remains constant. Such surfactant concentration is said critical micellar concentration. When such value is exceeded there are formed surfactant molecule aggregates said micelles, which assume conformations which depend on the concentration of the same surfactant.

To sum up, in order to control the suspension stability it is needed to intervene on the electrostatic charge around the particles and on the interface tension between solid phase and liquid phase.

According to an embodiment of the nanofluid according to the present invention, the solid phase of the heterogeneous mixture comprises copper oxide nanoparticles CuO with specific morphology and dimensions, as it is described in the following.

The solid phase dispersed in the liquid is made up of particles of nanometric dimensions (nanopowders or nanoparticles) with average dimension between 5 and 10 nm. It is however known that in the nanofluids the nanoparticles can be found aggregated in clusters up to 100 nm.

The nanofluid is a bi-phase mixture made up of a liquid fraction and a solid fraction; the liquid fraction comprises bi-distilled water and ionic surfactant additives in such a concentration to maximize the Zeta Potential and to minimize the interface tension between solid phase and liquid phase. The mass ratio between the surfactant quantity present in the liquid phase and the quantity of nanopowders is between 0,1% and 1.2%. The volume percentage of solid phase with respect to the total volume of the nanofluid is lower than 10% and is preferably between 1% and 4%.

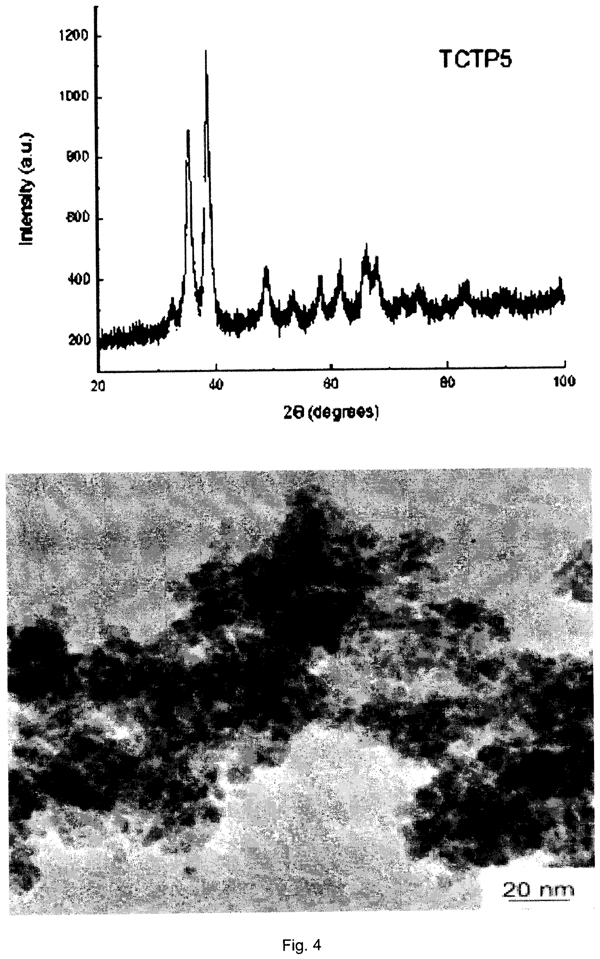

In the graph shown in figure 3, it is observed the result of the analysis XRD (X-ray-Diffraction) carried out on a sample of the solid phase in which it is confirmed the monoclinic crystallographic structure of the copper oxide. In addition, from the Debye Sherrer formulas there are individuated the dimensions of the nanoparticles which are between 5nm and 10nm.

The nanoparticles comprised in the nanofluid have regular morphology, in particular spherical morphology. This allows to optimize the heat exchange capacity and to reduce the tendency to remain entrapped on the surfaces of the pipes owing to the irregularities due to the roughness. In figure 4 it is observed an image obtained from the electron microscope analysis of a sample of nanopowders dispersed in the nanofluid object of the present invention.

The physical-chemical properties of the nanofluid are the following:

- electric conductivity: between 5 $\mu$S/cm and 1200 $\mu$S/cm
- PH: between 5.6 and 7.0
- density (at 20°C): between 1 g/cm$^3$ and 1.22 g/cm$^3$
- dynamic viscosity (at 90°C): between 0.31 cst and 2.1 cst
- heat conductivity (at 20°C) between 600mW/m K and 710 mW/m K

The nanofluid preparation comprises the following 4 steps: mixing water and nanoparticles; milling by means of rapid mill; sonication; adding the dispersing agent and additional sonication.

Mixing water and nanoparticles

In this step the bi-distilled water and the powder comprising the nanoparticles are mixed in quantities such that the desired solid volume percentage is reached; the powder dispersion in the fluid can be conveniently carried out by means of a magnetic stirrer.

Milling by means of rapid mill

The solution of nanoparticles and water is milled using a rapid mill, which consists of a jug inside which there is used a load of zirconia grains. In this way the clusters of nanoparticles formed are crushed.

The preferred milling parameters are the following: Grains volume + solution volume ≤ ½ jug volume
Grains volume = solution volume

Milling time = 60 minutes
Grains diameter = 1 mm

Sonication

After milling the nanofluid is separated from the grains and collected in a becher to carry out the sonication in an ultrasound bath. This step lasts 2 hours and allows to disaggregate further the nanoparticles clusters present in the fluid.

Adding the dispersing agent and sonication In this step there is added the dispersing agent; the quantity used is equal to 0.1-1.2% of the weight of the powder present in the fluid. Finally, the nanofluid is sonicated for another hour. The optimal parameters for the present application are the use of an ultrasound bath with 39 kHz frequency and 300W power for a sonication time equal to 3 hours.

The nanofluid according to the present invention has a wide range of uses. A typical application is the use of the nanofluid as additive for coolants in the automotive field. It is observed that the use of the nanofluid as coolant determines temperature reduction of the discharge valve owing to the improved heat transfer capacity with respect to the coolants known at the state of the art, and so it shows great performances as motor coolant. The nanofluid with the specific formulation individuated from TCT is used in the refrigerating system of the motor and the temperature of the discharge valve is confronted to the one obtained in case of motor cooling by means of water. By using the nanofluid as coolant the temperature of the cap of the discharge valve and of the valve seat at maximum power of the motor are respectively 5% and 13% lower than in case of the motor cooled by water.

Therefore, also in case of high heat stressing conditions of the motor the nanofluid shows to have a cooling capacity which guarantees advantages important for the components of the hot portions of the motor, thus allowing to increase efficiency and motor performance.

Claims

1. Nanofluid comprising
   bi-distilled water;
   copper oxide nanoparticles having average dimension between 5 and 10 nm;
   ionic surfactant,
   **characterized in that** copper oxide particles volume percentage with respect to the nanofluid is lower than 10% and
   mass ratio between the surfactant quantity present in the liquid phase and the quantity of nanopowders is between 0,1% and 1.2%.

2. Nanofluid according to claim 1 **characterized in that** copper oxide particles volume percentage with respect to the nanofluid is between 1% and 4%.

3. Nanofluid according to claim 1 or 2 **characterized in that** said nanoparticles have spherical morphology.

4. Nanofluid according to claim 1, 2 or 3 **characterized in that** pH of the nanofluid is comprised between 5.6 and 7.0.

5. Method for preparing a nanofluid according to any one of the preceding claims comprising the steps of:

   - mixing bi-distilled water and nanoparticles;
   - milling in a ball mill to allow the nanoparticles clusters to be dispersed;
   - nanofluid sonication;
   - adding the surfactant and additional sonication.

**Patentansprüche**

1. Nanofluid enthaltend
   bi-destilliertes Wasser;
   Kupferoxid-Nanopartikel mit einer durchschnittlichen Abmessung zwischen 5 und 10 nm;
   ionisches Tensid,
   **dadurch gekennzeichnet, dass** der Volumenprozentsatz der Kupferoxidteilchen in Bezug auf das Nanofluid niedriger als 10% ist
   das Massenverhältnis zwischen der in der flüssigen Phase vorhandenen Tensid-Menge und der Nanopulvermenge zwischen 0,1% und 1,2% liegt.

2. Nanofluid nach Anspruch 1, **dadurch gekennzeichnet, dass** der Volumenprozentsatz der Kupferoxidteilchen in Bezug auf das Nanofluid zwischen 1% und 4% liegt.

3. Nanofluid nach Anspruch 1 oder 2, **dadurch gekennzeichnet, dass** die genannten Nanopartikel eine sphärische Morphologie aufweisen.

4. Nanofluid nach Anspruch 1, 2 oder 3, **dadurch gekennzeichnet, dass** der pH-Wert des Nanofluides zwischen 5,6 und 7,0 liegt.

5. Verfahren zur Herstellung eines Nanofluides nach einem der vorhergehenden Ansprüche, folgende Schritte umfassend:

   - Mischen von bi-destilliertem Wasser und Nanopartikeln;
   - Mahlen in einer Kugelmühle, um das Dispergieren der Nanopartikel-Cluster zu ermöglichen;
- Nanofluid-Ultraschallbehandlung
- Zugabe des Tensids und zusätzliche Ultraschallbehandlung.

## Revendications

1.  Nano fluide contenant
    de l'eau bi-distillée;
    des nanoparticules d'oxyde de cuivre de dimension moyenne comprise entre 5 et 10 nm;
    du surfactant ionique,
    **caractérisé en ce que** le pourcentage en volume des particules d'oxyde de cuivre par rapport au nano fluide est inférieur à 10% et
    le rapport massique entre la quantité de surfactant présent dans la phase liquide et la quantité de nanopoudres est compris entre 0,1% et 1,2%.

2.  Nano fluide selon la revendication 1, **caractérisé en ce que** le pourcentage en volume d'oxyde de cuivre se situe par rapport à la nano fluide entre 1% et 4%.

3.  Nano fluide selon la revendication 1 ou 2, **caractérisé en ce que** lesdites nanoparticules ont une morphologie sphérique.

4.  Nano fluide selon la revendication 1, 2 ou 3, **caractérisé en ce que** le pH de la nano fluide est compris entre 5,6 et 7,0.

5.  Procédé de fabrication d'un nano fluide selon l'une quelconque des revendications précédentes, comprenant les étapes consistant à:

    - mélanger de l'eau bi-distillée et des nanoparticules;
    - broyage dans un broyeur à boulets pour permettre la dispersion des amas de nanoparticules;
    - traitement par ultrasons du nano fluide
    - ajout du surfactant et traitement supplémentaire par ultrasons.

## electric double layer

liquid

Particle with
negative surface
charge

Stern potential

Diffused layer

Zeta potential

mV

Surface potential

0

Distance from the surface of
the particle

Fig. 1

Liquid-air surface tension

Solid-air surface tension

$\vartheta < 90^0$

Solid-liquid surface tension

Fig. 2

Fig. 4

**EP 2 992 064 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 1329123
- US 2012006509 A